(19) Europäisches Patentamt
European Patent Office
Office européen des brevets

(11) **EP 4 219 062 B1**

(12) **EUROPEAN PATENT SPECIFICATION**

(45) Date of publication and mention
of the grant of the patent:
**20.11.2024 Bulletin 2024/47**

(21) Application number: **22154217.8**

(22) Date of filing: **31.01.2022**

(51) International Patent Classification (IPC):
***B23K 26/04*** *(2014.01)*     ***B23K 26/14*** *(2014.01)*
***B23K 26/38*** *(2014.01)*     ***B23K 26/40*** *(2014.01)*
***B23K 26/08*** *(2014.01)*     ***B23K 37/02*** *(2006.01)*
*B23K 101/18* *(2006.01)*     ***B23K 103/04*** *(2006.01)*

(52) Cooperative Patent Classification (CPC):
**B23K 26/38; B23K 26/048; B23K 26/0876;
B23K 26/14; B23K 26/1476; B23K 26/40;
B23K 37/0235;** B23K 2101/18; B23K 2103/04

(54) **LASER CUTTING METHOD AND MACHINE**

LASERSCHNEIDVERFAHREN UND -MASCHINE

PROCÉDÉ ET MACHINE DE DÉCOUPE AU LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.08.2023 Bulletin 2023/31**

(73) Proprietor: **Bystronic Laser AG
3362 Niederönz (CH)**

(72) Inventor: **WORATZ, Colin
3012 Bern (CH)**

(74) Representative: **Frei Patent Attorneys
Frei Patentanwaltsbüro AG
Hagenholzstrasse 85
8050 Zürich (CH)**

(56) References cited:
WO-A2-2009/007708     US-A1- 2005 172 764
US-A1- 2019 176 270     US-A1- 2020 254 570

**Description**

FIELD OF THE INVENTION

The invention is in the field of laser cutting of workpieces, and more particularly to a laser fusion cutting method and to a laser cutting machine according to the preamble of claims 1 and 13 respectively (see for example US 2019/176270 A1).

BACKGROUND OF THE INVENTION

In laser cutting of metal workpieces, a directed laser beam moves relative to the metal workpiece to locally create a cut in the metal material at the position of incidence of the laser beam on the workpiece. Modern laser cutting machines also direct a gas jet onto the position of incidence of the laser beam. The gas jet may assist the removal ("blowing") of molten metal material in a sol called "melt and blow cutting" or "fusion cutting" process, and/or, if it contains molecular oxygen, may be involved in a chemical reaction ("burning") in a reactive cutting (or "flame cutting") process. Both, the removal and, if applicable, the chemical reaction, help to generate a good cutting kerf.

Fusion cutting is quick and efficient, especially for cutting relatively thin workpieces or workpieces of medium thicknesses between about 4 mm and about 15 mm, whereas fusion cutting is a good alternative for workpieces of medium thickness and for thick workpieces.

In cutting processes, the quality of the kerf (the cut) is an often-important issue.

Properties that contribute to the quality of the kerf include the smoothness of the cut surface and the absence of burr.

There is an ongoing need for improvements of the cutting process, both, in terms of quality and in terms of cutting speed. One possibility to influence the cutting process is the variation of cutting parameters. Cutting parameters in addition to the laser power and the cutting speed (velocity of the laser beam relative to the workpiece) comprise the gas pressure, the nozzle diameter (diameter of the nozzle through which the cutting gas is directed onto the workpiece), the distance between the nozzle and the workpiece, the location of the beam focus, the diameter of the spot, the diameter of the transport fiber, in addition to the thickness of the workpiece to be cut.

SUMMARY OF THE INVENTION

It is an object of the present invention to provide a laser cutting method and a laser cutting machine overcoming drawbacks of prior art methods. It is especially an object to provide an effective laser fusion cutting method and a laser cutting machine suitable for fusion cutting of metal workpieces, especially of steel, having a thickness of between 3 mm and 20 mm, especially between 4 mm and 15 mm, wherein the quality of the kerf is improved compared to the prior art.

A laser fusion cutting method according to the present invention is defined in claim 1.

Further embodiments of the method according to the present invention are defined in the dependent claims.

It has surprisingly been found by the inventor of the present application that it may be beneficial if the laser parameters are chosen in a manner that the laser beam working its way through the workpiece has a comparably enhanced width so as to produce a wider kerf compared to the prior art.

Especially, the width of the kerf may be chosen to be larger than or equal to 0.1 mm plus 0.04 times the thickness of the workpiece material, i.e. $w_k \geq 0.1$ mm $+0.04*t$, where $w_k$ is the width of the kerf and t is the workpiece thickness.

For example for a workpiece of a thickness of 4 mm, the width of the kerf may be at least 0.26 mm, for a workpiece of a thickness of 10 mm, the width of the kerf may be at least 0.5 mm, for a workpiece of a thickness of 12 mm, the width may be at last 0.58 mm, etc.. In many embodiments, best results are achieved if $w_k \geq 0.1$ mm $+0.05*t$ or $w_k \geq 0.12$ mm $+0.04*t$, and for example $(0.2$ mm $+0.1*t) \geq wk \geq (0.12$ mm $+0.05*t)$.

Often, cut surfaces along the kerf are not strictly parallel, i.e., the width of the kerf is not strictly constant for all depths. In this, therefore, the width of the kerf in the sense of the present disclosure is defined as the width in a depth where the width is minimal. If the laser beam diverges within the workpiece, this corresponds to the width at the upper surface, i.e., the surface on the side from which the cutting beam comes.

The mentioned parameters especially hold for laser cutting machines with fiber lasers as laser sources. Fiber lasers in this context are lasers the active gain medium of which is a fiber being doped by a suitable dopant, such as a rare earth element. Fiber lasers are usually optically pumped. The wavelength of the laser radiation may especially be between 400 nm and 3000 nm (visible, near infrared or short-wavelength infrared), for example in the near infrared region between 750 nm and 1400 nm.

The laser cutting method is especially a fusion cutting method in which the cutting ejected onto the workpiece is a non-reactive gas such as Nitrogen gas, Argon gas, Helium gas or a mixture of these, or possibly a mixture of such non-reactive gas(es) with comparably small amounts (of less than 10%, especially less than 5%) of molecular Oxygen and/or Hydrogen. Especially, in contrast to reactive cutting, the oxygen content of the laser gas is not higher than the oxygen content of air. In embodiments, it may be lower than the oxygen content of air. On other words, the content of non-reactive gases is at least 78% or at least 79% or more than 79%, especially more than 90% or more than 95% or more than 96%.

In fusion cutting, if the laser beam is only moved along the cut to be made and not transversally, the width of the kerf essentially corresponds to the thickness of the laser beam (measured at the axial position where the laser beam impinges on the workpiece). Therefore, all considerations made in the present text relating to the width $w_k$ of the kerf also apply to the diameter $d_b$ of the laser beam on the workpiece and through the workpiece, which diameter is, in industrial laser cutting machines, a well-defined quantity. The optical parameters that influence the laser beam in industrial laser cutting machines, especially the diameter of the transport fiber and the parameters (focal lengths, position, etc.) of the optical elements that influence the laser beam downstream of the exit from the transport fiber are well-understood quantities that can be influenced either by adjusting the appropriate parameters (positions of the collimating/focusing lens and/or -mirrors) or by choosing the appropriate parts.

The increased kerf widths $w_k$ (and laser beam diameters) as described in the present text are especially beneficial for steel as a workpiece material. In the present text "steel" includes all kinds of steel, including stainless steel.

The approach according to the present invention is contrary to the prior art according to which, for fusion cutting, the laser beam has been made as narrow as possible (for thick workpieces, the prior art lower limits to the diameter of the laser beam included the requirement that the kerf has to be wide enough for the cut out parts to be still removable) so that the energy density was as high as possible to minimize the required laser power. The present invention therefore proposes to remove more workpiece material than would be strictly required for obtaining a certain cut.

It has been found by the inventor that when the cutting beam has a comparably larger diameter so as to create a wider kerf than in the prior art, there results a plurality of advantages: Firstly, the surface roughness along the cut is smaller, and the cut face is smoother and of better quality. Secondly, this in turn is advantageous for the parts removal process after the cutting process because during removal the parts will have less tendency to tilt, in addition to a broader kerf being generally beneficial for the removal process because less precision is required. Thirdly, it has been observed that there is less burr given the approach according to the invention, and this reduces the complexity of material treatment processes following the cutting process.

It is an insight of the present invention that these advantages exist, and it is a further insight underlying it that these advantages often outweigh the disadvantage that due to the reduced energy density coming with the larger width the cutting speed needs to be somewhat reduced. This outweighing is not in the least due to the fact that the above-mentioned advantages reduce the complexity of subsequent processing steps overcompensating for the loss in cutting speed and also due to the fact that modern laser cutting machines make enhanced laser powers possible so that a reduction in cutting speed is not a severe disadvantage.

Especially, the beam is chosen to have a focal position above the workpiece. This means that in a radiation direction, the focal position comes before the surface of the workpiece is reached. 'Above the workpiece' thus means 'towards the direction from which the laser impinges, and at a distance, from the one surface of the workpiece that faces towards this direction from which the laser beam impinges'. In most set-ups, the workpiece will lie on a working table, and the laser cutting head will be above the workpiece in the literal sense of the word 'above'; however, the present invention is also applicable in hypothetical situations in which the laser beam is not directed into a downward direction with respect to the direction of gravity.

Especially, the focal position may be between 1 mm and 20 mm or between 2 mm and 15 mm above the workpiece, for example between 3 mm and 10 mm above the workpiece. By having a focal position above the workpiece, one firstly achieves that the beam diverges towards the workpiece whereby the beam width on the workpiece is increased compared to the prior art, thereby contributing to enhanced width of the kerf. Secondly, the beam also diverges through the workpiece itself, so that the beneficial effects of the invention are even increased.

It has further been found that it is especially beneficial if a nozzle is used that is relatively close to the workpiece. Especially, the distance of the laser machining nozzle from the workpiece (meaning the distance between the nozzle outlet, i.e. the lowermost portion of the nozzle, to the workpiece surface) may be smaller than the distance of the focal position to the workpiece, so that the focal position is within the nozzle or elsewhere more towards the laser source than the position of the nozzle outlet. Especially, the nozzle outlet may be at a distance between 0 mm (i.e. physical contact between the nozzle and the workpiece) and 3 mm, especially between 0.2 mm and 1.5 mm.

The cutting gas pressure is according to the present invention between 4 bar and 20 bar, for example between 4 bar and 10 bar.

The diameter of the nozzle (at its position of minimal width, usually at the outlet) may be between 2 mm and 20 mm, especially between 5 mm 15 mm.

The diameter of the laser beam at the focal position may be between 0.2 mm and 2 mm, especially between 0.4 mm and 1.2 mm. If the focal position is above the workpiece, the width of the kerf will be a bit larger than this diameter. Especially, for the diameter d of the laser beam at the focal position, the relation $(0.05\ mm + 0.03 * t) \geq d \geq (0.11\ mm + 0.06 * t)$

may hold, where t is again the thickness of the workpiece. Especially, the above-given lower limits for $w_k$ may be translated into lower limits for d by being multiplied by 0.8.

The diameter of the laser fiber is between 100 $\mu$m and 800 $\mu$m.

The workpiece thickness may be between 3 mm and 20 mm, especially between 4 mm and 15 mm, and the workpiece material may be steel.

The cutting speed depends on the laser power and the thickness of the workpiece. It may be about half the speed that can be achieved if a narrower kerf is cut. The laser power may be at least 10 kW or at least 15 kW, and it as much as 30 kW, 40 kW or more; even laser powers of 100 kW or more may be achievable. In fact, the higher the laser power is the more dominant the advantages of the present invention are, as the reduction of cutting speed proportionally carries less weight for high laser powers and accordingly high cutting speeds.

In embodiments, the laser machining nozzle is cooled, especially by an actively conveyed cooling fluid, especially by liquid cooling (water cooling). To this end, it may comprise one or more cooling channels for a cooling liquid to circulate, as well as ports for injecting the cooling liquid and for discharging it. In addition or as an alternative, the laser cutting head may comprise a cooled nozzle carrier carrying the nozzle and having a thermal contact with the nozzle. Such a cooled nozzle carrier may comprise one or more cooling channels for a cooling liquid to circulate and ports for injecting the cooling liquid and to discharge it. The cooling liquid may be cooling water or any other suitable cooling liquid.

In addition or as an alternative to having a focal position above the workpiece, other measures can cause, or contribute to, the herein described (enhanced) width of the kerf.

For example, a combination of lenses and/or curved mirrors can cause a magnifying imaging. For example, when a collimating lens or focusing lens is placed in a location where the beam diverges, by choosing the position of this lens, the beam diameter may be engineered. This may be done for example at the exit from the transport fiber that guides the beam to the laser cutting head, or downstream of a first focusing lens by placing a next lens not in the focus of the first focusing lens but at an axial distance thereto, etc. Optical imaging per se is known in the art; however, embodiments of the present invention include the approach that a substantial magnification causes an increased kerf width.

In addition or as an alternative, the diameter of the transport fiber (or, to be more precise, the diameter of the transport fiber core) may be chosen to be larger than in prior art laser cutting machines, for example by having a transport fiber having a core diameter of at least 100 $\mu$m or more or of at least 150 $\mu$m, possibly depending on the thickness of the workpieces to be cut; the fiber core thickness may in according embodiments have values of up to 1000 $\mu$m.

As a further alternative to optical imaging, also dynamic beam shaping (DBS) can be used to achieve, using a focused beam (having a width of for example only 100 $\mu$m), a larger effective beam diameter by being moved in an according pattern the outer diameter/width of which corresponds to the desired kerf width. An even further alternative, related to optical imaging, is static beam shaping using an optical element that increases the focus diameter, wherein different intensity distributions are possible, such as ring-shaped, Gaussian, and others.

In addition to concerning a method, the present invention also concerns a laser cutting machine according to claim 13, which a laser cutting head, a laser source and a workpiece support, es well as a supply for a cutting gas that is emitted from a laser machining nozzle of the laser cutting head. The laser cutting machine may comprise parameters, stored in a memory to which a machine control software has access, for cutting workpieces, for example of steel. These parameters may comprise parameters that cause the machine to generate the laser beam so as to have an effective diameter (diameter, or in the case of dynamic beam shaping, diameter of the pattern) that on the workpiece corresponds to the kerf width as defined in the present text and may comprise any ones of the parameters discussed in the present text. Thus, the machine is equipped and programmed to carry out the method according to any embodiment described and claimed in this text.

BRIEF DESCRIPTION OF THE DRAWINGS

Hereinafter, embodiments of the present invention are described in more detail referring to drawings. The drawings are schematic and not to scale. In the drawings, same reference numbers refer to same or similar components. They show:

Fig. 1:    A laser cutting machine;

Fig. 2    A laser cutting head;

Fig. 3    A detail of showing a workpiece on which a divergent cutting beam impinges; and

Fig. 4    Examples of kerfs generated by the approach of the invention and by a prior art method.

## DESCRIPTION OF THE PREFERRED EMBODIMENTS

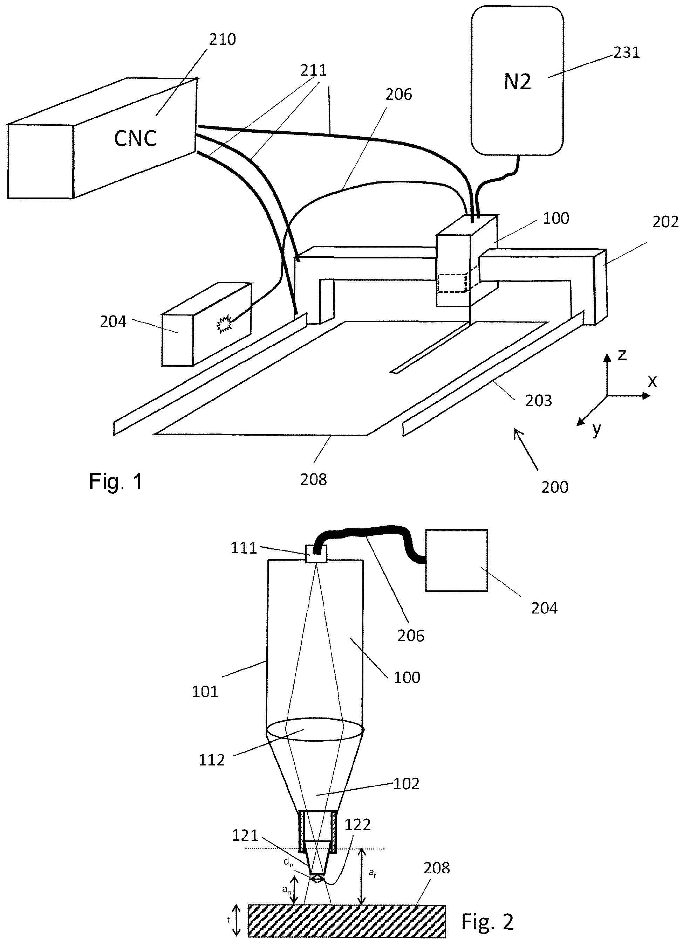

**Figure 1** shows an example of a laser cutting machine 200. The machine comprises a laser source 204 and a transport fiber 206, a laser cutting head 100, and a laser head moving mechanism. A workpiece 208 is supported by a working table (not shown). The laser cutting head moving mechanism comprises a bridge 202 relative to which the laser cutting head 100 is movable in x-direction, and which itself is movable, for example on a pair or rails 203, in y-direction relative to the working table and the workpiece 208. Also a movement of the laser head or of a component thereof (for example the nozzle and/or an optics unit) in the z-direction being the direction perpendicular to the workpiece surface and usually being the vertical direction may in embodiments be possible. The machine further comprises a machine control unit 210 with data lines 211 to the components of the movement mechanism and possibly to further units of the laser cutting machine (such as the laser source, a gas supply control, a cooling unit (not shown), etc.). Alternatively, the laser cutting machine may be laser tube cutting machine with mandrels for fixing and guiding a workpiece.

The workpiece 208 may be a metal sheet, especially a steel plate, that is cut by a laser beam emitted by the laser cutting head 100. Alternatively, the workpiece may be a metal tube.

A gas supply comprises a gas tank 231, for example an $N_2$ tank and a flexible gas pipe 232 as well as a gas supply control, and is equipped to supply the cutting gas to the laser cutting head 100 to be ejected to impinge on the position of incidence of the laser beam on the workpiece.

**Figure 2** schematically show an example of the laser cutting head 100. The laser cutting head comprises an interface 111 for the laser source 204, a laser head body 101 that contains a beam shaping installation 112 for shaping the laser beam 102 in a desired manner and, at a workpiece-side end (the lower end in the depicted orientation in which the laser acts from above the workpiece 208), a nozzle 121, namely a laser machining nozzle. The nozzle 121 may optionally be mounted in a manner that its z position can be varied relative to the laser head body 101 so that a nozzle-outlet-to-workpiece distance $a_n$ is an adjustable parameter (nozzle outlet 122). In addition or as an alternative, the laser head body 101 or a lower portion of the laser head may have an adjustable z-position to adjust the nozzle-outlet-to-workpiece distance $a_n$.

The focal position is at a distance $a_f$ from the workpiece surface, which distance $a_f$ is illustrated to be greater than the nozzle-outlet-to-workpiece distance $a_n$ so that the focus of the laser beam is above the nozzle outlet, i.e. within the nozzle or other part of the laser cutting head. The diameter of the nozzle outlet is denoted by $d_n$, and the thickness of the workpiece 208 is denoted by t in Fig. 2.

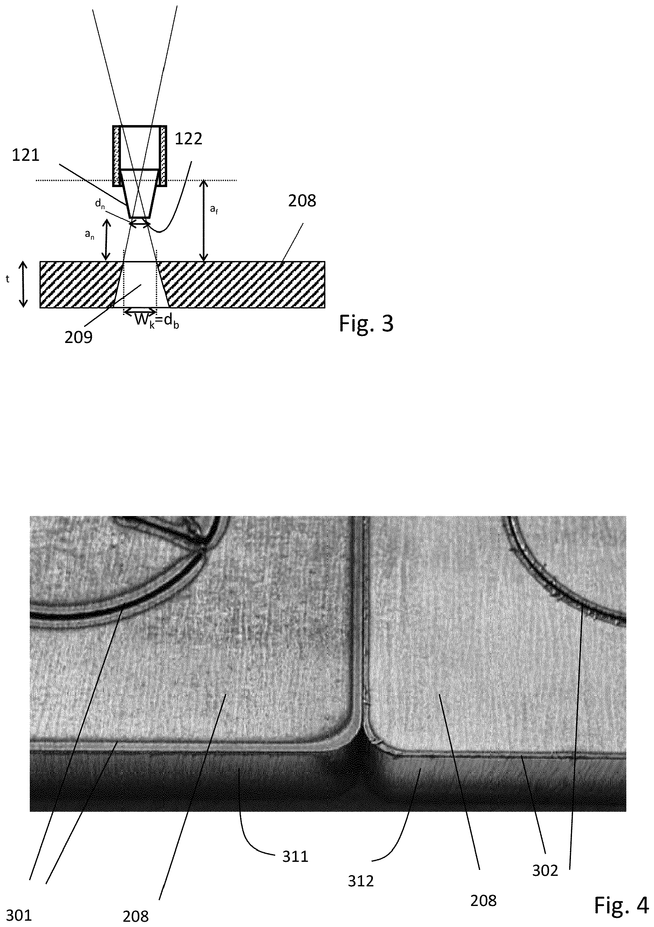

**Figure 3** shows a detail of a laser cutting beam with a focal position above the workpiece and the laser cutting beam thus diverging towards the workpiece and through the workpiece. In Fig. 3, as well as in Fig. 2, the divergence is shown somewhat exaggeratedly. The kerf 209 has a kerf width $w_k$ at the entry side (in the plane that corresponds to the plane of the surface facing towards the side from which the cutting beam impinges.), and the width increases towards the lower side, because the laser cutting beam diverges. Because the method described herein is fusion cutting, and because the set-up with a transport fiber produces a beam having a comparably homogeneous intensity profile, the width $w_k$ of the kerf corresponds to the diameter $d_b$ of the laser beam.

**Figure 4** shows two examples of workpieces 208 arranged next to one another. The workpieces are both cut out of a 12 mm thick steel plate, and are of identical composition. In both cases, the laser cutting beam for cutting out the respective workpiece and for making an additional cut in the respective workpiece had a power of 15 kW.

- For the workpiece on the left, a laser cutting beam with a focal position above the workpiece was used, so that the width of the kerf was about twice the standard width. More in concrete, the focus was between 8 mm and 10 mm above the upper workpiece surface, and the kerf had a width of 0.8 mm. The cutting speed was 3000 mm/min. The laser was a fiber laser. The other parameters were: Cutting gas: $N_2$, cutting gas pressure: 7.5 bar, fiber diameter: 100 $\mu$m, laser power:15 kW, nozzle-to-workpiece distance:0.25 mm, nozzle diameter: 6 mm

- For the workpiece on the right, focal position was 3.5 mm below the upper workpiece surface, and the width of the kerf was 0.45mm. The cutting speed was 5600 mm/min, with all other parameters being the same as for the workpiece on the left.

The workpiece 208 on the left, produced by the method according to the present invention, has essentially no burr along the cuts 301, whereas the burr along the cuts 302 through and along the workpiece on the right, produced by a method according to the prior art, are substantial and visible. Also, the roughness of the cut face 311 of the workpiece on the left is significantly and visibly smaller than the roughness of the cut face 312 of the workpiece on the right that was produced conventionally.

The bent cut in the upper half of Fig. 4 is visibly wider in the workpiece on the left compared to the workpiece on the right, due to the approach according to the present invention.

Further experiments have revealed, for identical workpieces, a systematical improvement of the surface quality in the cut as a function of the focal position for focal positions between 1 mm below the workpiece surface and 4 mm above the workpiece surface with other parameters unchanged, in steps of 1 mm. Because the higher the focal position the greater the average width of the kerf, this demonstrates that the width of the kerf positively influences the quality of the cut.

**Claims**

1. A laser fusion cutting method for cutting a metal workpiece, the method comprising the steps of providing the workpiece (208) of a metal, the workpiece having a thickness (t), of causing a laser beam from a laser beam source to impinge on the workpiece (208) while the laser beam is moved relative to the workpiece, to generate a kerf through the workpiece, and while a cutting gas is ejected from a laser machining nozzle (121) and is thereby directed onto a position of incidence of the laser beam on the workpiece, the cutting gas comprising at least 78 volume percent of non-reactive gas portions,

   the method **being characterised in that:**
   a focal position of the laser beam is at a distance ($a_\varepsilon$) of at least 1 mm from the workpiece (208) in a direction towards the beam source
   **and in that** a gas pressure of the cutting gas supplied to the laser machining nozzle (121) is between 4 bar and 20 bar.

2. The method according to claim 1, wherein the width $w_k$ of the kerf is greater than or equal to 0.1 mm+0.04*t.

3. The method according to claim 2, wherein the width $w_k$ fulfils the following relation:

$$(0.2 \text{ mm}+0.1\text{*t})\geq w_k \geq (0.12 \text{ mm}+0.05\text{*t}).$$

4. The method according to any one of the previous claims, wherein a distance ($a_n$) of the laser machining nozzle (121) from the workpiece (208) is smaller than the distance of the focal position of the laser beam from the workpiece (208).

5. The method according to any one of the previous claims, wherein the distance ($a_\varepsilon$) of the focal position of the laser beam from the workpiece (208) is between 2 mm and 15 mm, especially between 3 mm and 10 mm.

6. The method according to any one of the previous claims, wherein the distance ($a_n$) of the laser machining nozzle (121) from the workpiece (208) is between 0 and 3 mm, especially between 0.2 mm and 1.5 mm.

7. The method according to any one of the previous claims, wherein a diameter ($d_n$) of an outlet of the laser machining nozzle (121) is between 2 mm and 20 mm, especially between 5 mm and 15 mm or between 6 mm and 12 mm.

8. The method according to any one of the previous claims, wherein a gas pressure of the cutting gas supplied to the laser machining nozzle (121) is between 4 bar and 10 bar.

9. The method according to any one of the previous claims, wherein the cutting gas contains less than 5% oxygen, for example no oxygen.

10. The method according to any one of the previous claims, wherein a diameter of the laser beam at the focal position is between 0.1 mm and 2 mm, especially between 0.4 mm and 1.2 mm.

11. The method according to any one of the previous claims, wherein the workpiece (208) is a steel plate.

12. The method according to any one of the previous claims, wherein the laser beam is generated in an active gain medium being a doped fiber and is guided to a laser cutting head carrying the laser machining nozzle by a transport fiber.

13. A laser cutting machine (200), comprising a laser cutting head (100), a laser source (204), and a workpiece support, the laser cutting machine (200) further comprising a machine control unit (210) configured to cause the laser cutting head (100) to undergo a movement relative to the workpiece support while a laser beam is emitted from the laser cutting head for making a controlled cut in a workpiece (208) supported by the workpiece support, the laser cutting head (100) comprising a laser machining nozzle (121) equipped to eject a jet of a cutting gas jet onto the workpiece (208), and the laser cutting machine (200) further comprising a gas tank of the cutting gas for supplying the cutting gas to the laser machining nozzle (121), the cutting gas comprising at least 80 volume percent of non-reactive gas portions, being **characterised in that** a memory comprising stored parameters is provided, and **in that** the machine control unit (210) has access to the memory, so that the laser control unit (210) is configured to control the laser cutting device to carry out the method according to any one of the previous claims.

## Patentansprüche

1. Laserschmelzschneidverfahren zum Schneiden eines Metallwerkstücks, wobei das Verfahren die folgenden Schritte umfasst: Bereitstellen des Werkstücks (208) aus einem Metall, wobei das Werkstück eine Dicke (t) aufweist, Bewirken, dass ein Laserstrahl von einer Laserstrahlquelle auf das Werkstück (208) auftrifft, während der Laserstrahl relativ zu dem Werkstück bewegt wird, um einen Schneidspalt durch das Werkstück zu erzeugen, und während ein Schneidgas aus einer Laserbearbeitungsdüse (121) ausgestoßen und dadurch auf eine Einfallsposition des Laserstrahls auf das Werkstück gerichtet wird, wobei das Schneidgas mindestens 78 Volumenprozent an nicht reaktiven Gasanteilen umfasst,
wobei das Verfahren **dadurch gekennzeichnet ist, dass:**

   sich eine Fokusposition des Laserstrahls in einem Abstand (af) von mindestens 1 mm vom Werkstück (208) in Richtung der Strahlquelle befindet,
   **und dadurch, dass** ein Gasdruck des der Laserbearbeitungsdüse (121) zugeführten Schneidgases zwischen 4 bar und 20 bar beträgt.

2. Verfahren nach Anspruch 1, wobei die Breite $w_k$ des Schneidspalts größer als oder gleich 0,1 mm + 0,04 * $t$ ist.

3. Verfahren nach Anspruch 2, wobei die Breite $w_k$ die folgende Relation erfüllt:

$$(0,2 \text{ mm} + 0,1 * t) \geq w_k \geq (0,12 \text{ mm} + 0,05 * t).$$

4. Verfahren nach einem der vorhergehenden Ansprüche, wobei ein Abstand ($a_n$) der Laserbearbeitungsdüse (121) von dem Werkstück (208) kleiner ist als der Abstand der Fokusposition des Laserstrahls von dem Werkstück (208).

5. Verfahren nach einem der vorhergehenden Ansprüche, wobei der Abstand ($a_\varepsilon$) der Fokusposition des Laserstrahls von dem Werkstück (208) zwischen 2 mm und 15 mm, insbesondere zwischen 3 mm und 10 mm, beträgt.

6. Verfahren nach einem der vorhergehenden Ansprüche, wobei der Abstand ($a_n$) der Laserbearbeitungsdüse (121) von dem Werkstück (208) zwischen 0 und 3 mm, insbesondere zwischen 0,2 mm und 1,5 mm, beträgt.

7. Verfahren nach einem der vorhergehenden Ansprüche, wobei ein Durchmesser ($d_n$) eines Auslasses der Laserbearbeitungsdüse (121) zwischen 2 mm und 20 mm, insbesondere zwischen 5 mm und 15 mm oder zwischen 6 mm und 12 mm, beträgt.

8. Verfahren nach einem der vorhergehenden Ansprüche, wobei ein Gasdruck des der Laserbearbeitungsdüse (121) zugeführten Schneidgases zwischen 4 bar und 10 bar beträgt.

9. Verfahren nach einem der vorhergehenden Ansprüche, wobei das Schneidgas weniger als 5 % Sauerstoff, z. B. keinen Sauerstoff, enthält.

10. Verfahren nach einem der vorhergehenden Ansprüche, wobei ein Durchmesser des Laserstrahls an der Fokusposition zwischen 0,1 mm und 2 mm, insbesondere zwischen 0,4 mm und 1,2 mm, beträgt.

11. Verfahren nach einem der vorhergehenden Ansprüche, wobei das Werkstück (208) eine Stahlplatte ist.

**12.** Verfahren nach einem der vorhergehenden Ansprüche, wobei der Laserstrahl in einem aktiven Verstärkungsmedium erzeugt wird, das eine dotierte Faser ist, und durch eine Transportfaser zu einem Laserschneidkopf geführt wird, der die Laserbearbeitungsdüse trägt.

**13.** Laserschneidmaschine (200), umfassend einen Laserschneidkopf (100), eine Laserquelle (204) und einen Werkstückträger, wobei die Laserschneidmaschine (200) ferner eine Maschinensteuereinheit (210) umfasst, die dazu konfiguriert ist, den Laserschneidkopf (100) zu veranlassen, eine Bewegung relativ zu dem Werkstückträger auszuführen, während ein Laserstrahl von dem Laserschneidkopf emittiert wird, um einen kontrollierten Schnitt in einem von dem Werkstückträger getragenen Werkstück (208) durchzuführen, wobei der Laserschneidkopf (100) eine Laserbearbeitungsdüse (121) umfasst, die zum Ausstoßen eines Strahls eines Schneidgasstrahls auf das Werkstück (208) eingerichtet ist, und die Laserschneidmaschine (200) ferner einen Gastank für das Schneidgas zum Zuführen des Schneidgases zu der Laserbearbeitungsdüse (121) umfasst, wobei das Schneidgas mindestens 80 Volumenprozent an nicht reaktiven Gasanteilen umfasst, **dadurch gekennzeichnet, dass** ein Speicher mit gespeicherten Parametern vorgesehen ist und dass die Maschinensteuereinheit (210) Zugriff auf den Speicher hat, so dass die Lasersteuereinheit (210) so konfiguriert ist, dass sie die Laserschneidvorrichtung steuert, um das Verfahren nach einem der vorhergehenden Ansprüche auszuführen.

## Revendications

**1.** Procédé de découpe par fusion laser pour découper une pièce métallique, le procédé comprenant les étapes consistant à fournir la pièce (208) en métal, la pièce ayant une épaisseur (t), à amener un faisceau laser provenant d'une source de faisceau laser à frapper la pièce (208) pendant que le faisceau laser est déplacé par rapport à la pièce, pour générer une entaille à travers la pièce, et pendant qu'un gaz de découpe est éjecté à partir d'une buse d'usinage laser (121) et est ainsi dirigé sur une position d'incidence du faisceau laser sur la pièce, le gaz de coupe comprenant au moins 78 pour cent en volume de parties de gaz non réactif,
le procédé **étant caractérisé en ce que** :

une position focale du faisceau laser se situe à une distance ($a_\varepsilon$) d'au moins 1 mm de la pièce (208) dans une direction vers la source du faisceau
**et en ce qu'**une pression de gaz du gaz de coupe fourni à la buse d'usinage laser (121) est comprise entre 4 bars et 20 bars.

**2.** Procédé selon la revendication 1, dans lequel la largeur $w_k$ de l'entaille est supérieure ou égale à 0,1 mm + 0,04*t.

**3.** Procédé selon la revendication 2, dans lequel la largeur $w_k$ satisfait à la relation suivante :

$$(0,2 \text{ mm} + 0,1\text{*t}) \geq w_k \geq (0,12 \text{ mm} + 0,05\text{*t}).$$

**4.** Procédé selon l'une quelconque des revendications précédentes, dans lequel une distance ($a_n$) entre la buse d'usinage laser (121) et la pièce (208) est inférieure à la distance entre la position focale du faisceau laser et la pièce (208).

**5.** Procédé selon l'une quelconque des revendications précédentes, dans lequel la distance (af) entre la position focale du faisceau laser et la pièce (208) est comprise entre 2 mm et 15 mm, notamment entre 3 mm et 10 mm.

**6.** Procédé selon l'une quelconque des revendications précédentes, dans lequel la distance ($a_n$) entre la buse d'usinage laser (121) et la pièce (208) est comprise entre 0 et 3 mm, notamment entre 0,2 mm et 1,5 mm.

**7.** Procédé selon l'une quelconque des revendications précédentes, dans lequel un diamètre ($d_n$) d'une sortie de la buse d'usinage laser (121) est compris entre 2 mm et 20 mm, notamment entre 5 mm et 15 mm ou entre 6 mm et 12 mm.

**8.** Procédé selon l'une quelconque des revendications précédentes, dans lequel une pression de gaz du gaz de découpe fourni à la buse d'usinage laser (121) est comprise entre 4 bars et 10 bars.

**9.** Procédé selon l'une quelconque des revendications précédentes, dans lequel le gaz de découpe contient moins de 5 % d'oxygène, par exemple ne contient pas d'oxygène.

10. Procédé selon l'une quelconque des revendications précédentes, dans lequel un diamètre du faisceau laser à la position focale est compris entre 0,1 mm et 2 mm, notamment entre 0,4 mm et 1,2 mm.

11. Procédé selon l'une quelconque des revendications précédentes, dans lequel la pièce (208) est une plaque d'acier.

12. Procédé selon l'une quelconque des revendications précédentes, dans lequel le faisceau laser est généré dans un milieu de gain actif qui est une fibre dopée et est guidé vers une tête de découpe laser portant la buse d'usinage laser par une fibre de transport.

13. Machine de découpe laser (200), comprenant une tête de découpe laser (100), une source laser (204) et un support de pièce, la machine de découpe laser (200) comprenant en outre une unité de commande de machine (210) conçue pour amener la tête de découpe laser (100) à être animée d'un mouvement par rapport au support de pièce tandis qu'un faisceau laser est émis depuis la tête de découpe laser pour réaliser une découpe commandée dans une pièce (208) supportée par le support de pièce, la tête de découpe laser (100) comprenant une buse d'usinage laser (121) équipée pour éjecter un jet d'un jet de gaz de découpe sur la pièce (208), et la machine de découpe laser (200) comprenant en outre un réservoir de gaz du gaz de découpe pour alimenter en gaz de coupe la buse d'usinage laser (121), le gaz de découpe comprenant au moins 80 pour cent en volume de parties de gaz non réactif, **caractérisée en ce qu'**il est prévu une mémoire comprenant des paramètres stockés, et **en ce que** l'unité de commande de machine (210) a accès à la mémoire, de sorte que l'unité de commande laser (210) soit conçue pour amener le dispositif de découpe laser à mettre en oeuvre le procédé selon l'une quelconque des revendications précédentes.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2019176270 A1